(19) Europäisches Patentamt / European Patent Office / Office européen des brevets

(11) **EP 3 254 172 B1**

(12) **EUROPÄISCHE PATENTSCHRIFT**

(45) Veröffentlichungstag und Bekanntmachung des Hinweises auf die Patenterteilung:
**08.12.2021** **Patentblatt 2021/49**

(51) Int Cl.:
*G06F 3/01* *(2006.01)* *G06F 3/042* *(2006.01)*
*B60R 21/015* *(2006.01)*

(21) Anmeldenummer: **15812999.9**

(22) Anmeldetag: **10.12.2015**

(86) Internationale Anmeldenummer:
**PCT/EP2015/079210**

(87) Internationale Veröffentlichungsnummer:
**WO 2016/124278 (11.08.2016 Gazette 2016/32)**

(54) **BESTIMMUNG EINER POSITION EINES FAHRZEUGFREMDEN OBJEKTS IN EINEM FAHRZEUG**

DETERMINATION OF A POSITION OF A NON-VEHICLE OBJECT IN A VEHICLE

DÉTERMINATION D'UNE POSITION D'UN OBJET ÉTRANGER À UN VÉHICULE DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2015  DE 102015201901**

(43) Veröffentlichungstag der Anmeldung:
**13.12.2017  Patentblatt 2017/50**

(73) Patentinhaber: **Volkswagen Aktiengesellschaft 38440 Wolfsburg (DE)**

(72) Erfinder:
• **THEIMER, Wolfgang 44879 Bochum (DE)**
• **MEIERLING, Klaus 44879 Bochum (DE)**

(56) Entgegenhaltungen:
**EP-A2- 1 837 227** **WO-A1-99/34235**
**DE-A1-102004 038 965** **DE-A1-102011 089 195**
**DE-A1-102012 218 843** **DE-A1-102013 000 080**

**Beschreibung**

Die vorliegende Erfindung betrifft ein Verfahren zur Bestimmung einer Position eines fahrzeugfremden Objekts in einem Fahrzeug, insbesondere die Position eines Fahrzeuginsassen, eines Körperteils eines Fahrzeuginsassen oder eines in dem Fahrzeug nicht fest verbauten Zusatzobjekts, sowie eine entsprechende Positionsbestimmungsvorrichtung. Die vorliegende Erfindung betrifft insbesondere ein Erzeugen und Ausgeben einer auf ein Bedienelement bezogenen Zusatzinformation in einem Fahrzeug auf der Grundlage der Position des fahrzeugfremden Objekts.

Die Funktionalität technischer Geräte wird immer komplexer und Zusammenhänge zwischen Eingaben an diesen Geräten und einem Verhalten dieser Geräte sind teilweise nicht einfach nachvollziehbar. Dies betrifft beispielsweise auch technische Geräte, welche in einem Fahrzeug, beispielsweise in einem Personenkraftwagen oder einem Lastkraftwagen, verbaut werden. Bedienungsanleitungen für diese technischen Geräte werden daher immer umfangreicher und können beispielsweise zentral in einem Informationssystem des Fahrzeugs, beispielsweise über eine sogenannte Head-Unit, vorgehalten und von einem Benutzer des Fahrzeugs abgerufen werden. Andererseits ist es ein natürliches menschliches Verhalten, einen unbekannten Gegenstand zu erforschen, indem dieser berührt, umfasst und in seiner Struktur untersucht wird. Um dies zu unterstützen, kann eine Interaktion des Benutzers mit dem technischen Gerät mit entsprechenden Sensoren erfasst werden. Sind beispielsweise in einem Fahrzeug mehrere derartige technische Geräte und entsprechende Bedienelemente vorgesehen, ist für jedes technische Gerät oder jede Bedienvorrichtung eine entsprechende Sensorik erforderlich, um die Interaktion mit dem Benutzer zu erfassen.

In diesem Zusammenhang offenbart die DE 10 2011 089 195 A1 eine Vorrichtung zur berührungslosen Erfassung von Gegenständen und/oder Personen und von diesen ausgeführte Gesten und/oder Bedienvorgänge, welche in einem Fahrzeuginnenraum angeordnet ist und eine optische Erfassungseinheit umfasst. Mittels der optischen Erfassungseinheit sind ein Gegenstand und/oder eine Person und/oder eine von dieser Person ausgeführte Geste dreidimensional erfassbar. Beispielsweise wird somit eine Bewegung einer Hand oder eines Fingers eines Fahrzeugführers dreidimensional erfasst, welche beispielsweise einer virtuellen

Betätigung einer Anzeigeeinheit im Fahrzeug entspricht.

Die WO 99/34235 A1 und die DE 10 2013 000080 A1 betreffen Fahrzeugbedienvorrichtungen zur berührungslosen Erfassung von Gegenständen und/oder Personen in Fahrzeugen.

Die DE 11 2008 001 396 T5 betrifft eine Fahrzeugbedienungsvorrichtung, welche eine Sprachbedienungseinheit zum Erkennen einer geäußerten Sprache und zum Ausgeben eines Erkennungsergebnisses und eine räumliche Bedienungseinheit zum Erkennen einer innerhalb eines Raumes durchgeführten Bewegung und Ausgeben eines Erkennungsergebnisses umfasst. Eine Steuereinheit zeigt beispielsweise ein Menü für das Bedienen einer Fahrzeugbedienvorrichtung auf einer Anzeigeeinheit gemäß dem aus der Spracherkennungseinheit übertragenen Sprachbedienungserkennungsergebnis an und führt eine Verarbeitung zu einem aus dem Menü ausgewählten Gegenstand anhand des aus der Bilderkennungseinheit übertragenen räumlichen Bedienungserkennungsergebnis durch.

Die EP 2 762 345 A2 betrifft ein Verfahren zum Betrieb von Vorrichtungen und Systemen in einem Fahrzeug, um eine Bedienpersonenablenkung zu verringern. Eine Gestenerkennungsunterlage ist vorgesehen, um eine Bedienungsanweisung zu empfangen und die Bedienungsanweisung zu einem Computersteuersystem zu übertragen. Eine Rückmeldungsvorrichtung ist mit dem Computersteuersystem verbunden und erzeugt ein Rückmeldungssignal, um der Fahrzeugbedienperson zu bestätigen, dass die Gestenerkennungsunterlage die Bedienungsanweisung empfangen hat.

Die EP 2 118 722 B1 betrifft ein automatisiertes Erzeugen, Umschreiben und Editieren eines Dokuments auf den Grundlagen von Verhaltensweisen eines Benutzers, welche aus einem dreidimensionalen Bildstrom identifiziert werden und eine Steuerung des Dokuments auslösen. Die DE 10 2004 038 965 A1 betrifft eine Handbildschaltvorrichtung, welche Mittel zur Aufnahme eines Bildes eines distalen Armes umfasst, der in einer festgelegten Bildaufnahmezone angeordnet ist, in der ein Handbild und/oder eine Bewegung eines Fingers einer Hand ausgehend von dem Bild erfasst wird, das durch Bildaufnahmemittel aufgenommen wurde, um Informationen hinsichtlich eines vorgegebenen Schaltvorgangs zu erhalten. Die mit dem Schaltvorgang korrelierten Informationen, die durch das Handbild des Fahrers oder die Handflächenbewegung spezifiziert sind, können beispielsweise an ein Audiosystem, eine Klimaanlage oder dergleichen ausgegeben werden.

Aufgabe der vorliegenden Erfindung ist es, eine intuitive Bedienung komplexer technischer Geräte insbesondere in einem Fahrzeug auf kostengünstige Art und Weise bereitzustellen und zu unterstützen.

Diese Aufgabe wird gemäß der vorliegenden Erfindung durch ein Verfahren zur Bestimmung einer Position eines fahrzeugfremden Objekts in einem Fahrzeug nach Anspruch 1, eine Positionsbestimmungsvorrichtung nach Anspruch 3 und ein Fahrzeug nach Anspruch 6 gelöst. Die abhängigen Ansprüche definieren bevorzugte und vorteilhafte Ausführungsformen der Erfindung.

Gemäß der vorliegenden Beschreibung wird ein Verfahren zur Bestimmung einer Position eines fahrzeugfremden Objekts in einem Fahrzeug bereitgestellt. Das fahrzeugfremde Objekt umfasst insbesondere beispielsweise einen Fahrzeuginsassen, ein Körperteil eines Fahrzeuginsassen oder ein in dem Fahrzeug nicht fest verbautes Zusatzobjekt, beispielsweise ein mobiles Endgerät oder ein Mobilfunktelefon. Bei dem Verfahren wird eine Referenztiefenkarte mit einer Erfassungsvorrichtung erfasst. Eine Tiefenkarte gibt für Bildpunkte eines Erfassungsbereichs der Erfassungsvorrichtung jeweils eine Entfernungsinformation zwischen der Erfassungsvorrichtung und einer Oberfläche eines Objekts an dem jeweiligen Bildpunkt an. Die Oberfläche kann beispielsweise eine Oberfläche eines Objekts des Fahrzeugs umfassen, beispielsweise eine Oberfläche eines Armaturenbretts, eines Sitzes, eines Lenkrades oder einer Mittelkonsole, oder eine Oberfläche des fahrzeugfremden Objekts, dessen Position zu bestimmen ist, also beispielsweise die Oberfläche eines Fahrzeuginsassen, eines Körperteils eines Fahrzeuginsassen oder eines in dem Fahrzeug nicht fest verbauten Zusatzobjekts. Die Referenztiefenkarte gibt die jeweiligen Entfernungsinformationen für die jeweiligen Bildpunkte an, während sich das fahrzeugfremde Objekt nicht in dem Erfassungsbereich befindet. In dem Erfassungsbereich befinden sich vorzugsweise verschiedene Bedienelemente des Fahrzeugs.

Somit stellt die Referenztiefenkarte eine dreidimensionale Bildinformation des Erfassungsbereichs und insbesondere der darin befindlichen Bedienelemente bereit. Da die Referenztiefenkarte erfasst wird, während sich das fahrzeugfremde Objekt nicht in dem Erfassungsbereich befindet, beziehen sich die Entfernungsinformationen sowie die dreidimensionalen Bildinformationen auf Objekte des Fahrzeugs, wie z.B. Bedienelemente des Fahrzeugs, und werden nicht durch das Vorhandensein eines Fahrzeuginsassen oder Zusatzobjekts beeinträchtigt. Die Referenztiefenkarte kann beispielsweise erfasst werden, wenn das Fahrzeug verriegelt ist und ein Sitzbelegungssensor anzeigt, dass sich kein Insasse innerhalb des Erfassungsbereichs befindet, oder wenn sich über einen längeren Zeitraum von beispielsweise einigen Minuten die Tiefenkarte nicht geändert hat. Bei dem Verfahren wird ferner eine aktuelle Tiefenkarte mit der Erfassungsvorrichtung erfasst. Die aktuelle Tiefenkarte gibt für Bildpunkte des Erfassungsbereichs jeweils eine aktuelle Entfernungsinformation zwischen der Erfassungsvorrichtung und einer Oberfläche eines Objekts an den jeweiligen Bildpunkt an, während sich das fahrzeugfremde Objekt, dessen Position zu bestimmen ist, in dem Erfassungsbereich befindet. Die Oberfläche kann daher entweder eine Oberfläche eines Objekts des Fahrzeugs, wie z.B. ein Bedienelement, umfassen oder eine Oberfläche des fahrzeugfremden Objekts, beispielsweise des Fahrzeuginsassen, welcher eine Hand oder einen Arm in dem Erfassungsbereich bewegt. Für jeden Bildpunkt des Erfassungsbereichs wird nun eine jeweilige Tiefendifferenz bestimmt. Die Tiefendifferenz für einen bestimmten Bildpunkt wird in Abhängigkeit von der Entfernungsinformation der Referenztiefenkarte an dem Bildpunkt und der Entfernungsinformation der aktuellen Tiefenkarte an dem Bildpunkt bestimmt. Die Position des fahrzeugfremden Objekts, dessen Position zu bestimmen ist, wird in Abhängigkeit von den Tiefendifferenzen bestimmt. Bildpunkte, welche aktuell beispielsweise nicht von dem Körperteil des Fahrzeuginsassen oder dem Zusatzobjekt beeinflusst werden, haben in der aktuellen Tiefenkarte und in der Referenztiefenkarte im Wesentlichen die gleiche Entfernungsinformation. Bildpunkte, welche das Körperteil des Fahrzeuginsassen oder das Zusatzobjekt wiedergeben, haben hingegen in der aktuellen Tiefenkarte eine andere Entfernungsinformation als in der Referenztiefenkarte. Somit können auf einfache Art und Weise aus den Tiefendifferenzen diejenigen Bildpunkte bestimmt werden, welche durch das Körperteil des Fahrzeuginsassen oder das Zusatzobjekt beeinflusst werden. Somit kann eine Position oder eine Positionsänderung des Körperteils des Fahrzeuginsassen oder des Zusatzobjekts auf einfache Art und Weise bestimmt werden. Auf der Grundlage der bestimmten Position des Körperteils des Fahrzeuginsassen kann beispielsweise bestimmt werden, ob sich beispielsweise eine Hand des Fahrzeuginsassen einem Bedienelement des Fahrzeugs annähert oder dieses berührt und eine entsprechende Information, welche dem Bedienelement zugeordnet ist, kann auf akustischem oder optischem Wege ausgegeben werden, um die Bedienung des Bedienelements zu vereinfachen oder intuitiver zu gestalten. Der Erfassungsbereich kann beispielsweise einen Bereich im vorderen Teil des Fahrzeugs umfassen, beispielsweise ein Armaturenbrett, ein Lenkrad, eine Mittelkonsole sowie Armlehnen in den Türen des Fahrzeugs. Dadurch kann eine Vielzahl von Bedienelementen, welche in dem Erfassungsbereich angeordnet sind, überwacht werden und entsprechende Informationen zu den Bedienelementen ausgegeben werden, wenn erkannt wird, dass ein Fahrzeuginsasse sich dem jeweiligen Bedienelement nähert oder es berührt.

Gemäß einer Ausführungsform, die nicht von den Ansprüchen umfasst wird, wird für eine Position des fahrzeugfremden Objekts bestimmt, ob sich das fahrzeugfremde Objekt in der Nähe zu einer Oberfläche eines Objekts des Fahrzeugs, beispielsweise einer Bedienvorrichtung, befindet. Diese Bestimmung erfolgt, indem eine Tiefendifferenz für einen Bildpunkt des fahrzeugfremden Objekts mittels einer Bewertungsfunktion verarbeitet wird. Die Bewertungsfunktion gibt an, dass die Position des fahrzeugfremden Objekts in der Nähe zu der Oberfläche des Objekts des Fahrzeugs ist, wenn die Tiefendifferenz einen Wert zwischen einem ersten vorgegebenen Schwellenwert und einem zweiten vorgegebenen Schwellenwert aufweist. Anders ausgedrückt, wird ein Bildpunkt, welcher das fahrzeugfremde Objekt zumindest teilweise abbildet, nur dann als nah zu einem Objekt des Fahrzeugs erkannt, wenn der Bildpunkt eine Mindestentfernung zu Punkten des Objekts des Fahrzeugs hat und zusätzlich die Distanz zu dem Objekt des Fahrzeugs nicht zu groß ist. Da die Tiefenkarten verrauscht sein können, ist eine Mindestentfernung zu Punkten des Objekts des Fahrzeugs erforderlich, um das fahrzeugfremde Objekt zuverlässig von dem Objekt des Fahrzeugs unterscheiden zu können. Die Erkennung einer Annäherung an die Oberfläche eines Bedienelements kann beispielsweise verwendet werden, um einem Fahrzeuginsassen bei oder vor der Berührung des Bedienelements eine Information zu der Bedienung des Bedienelements bereitzustellen.

Bei einer weiteren Ausführungsform, die nicht von den Ansprüchen umfasst wird, des Verfahrens wird zusätzlich eine Berührung eines Bedienelements oder eine Annäherung an ein Bedienelement in Abhängigkeit von der Position des fahrzeugfremden Objekts bestimmt und eine auf das Bedienelement bezogene Zusatzinformation in Abhängigkeit von der bestimmten Berührung oder Annäherung erzeugt und ausgegeben. Die Zusatzinformation kann beispielsweise eine Hilfsinformation sein, welche die Funktion des Bedienelements erläutert. Die Zusatzinformation kann beispielsweise in einem Head-Up-Display, einem Display eines Infotainmentsystems des Fahrzeugs oder akustisch ausgegeben werden. Die Zusatzinformation kann insbesondere eine Information über eine Funktion umfassen, welche mit dem Bedienelement beeinflusst werden kann. Weiterhin kann insbesondere zusätzlich ein Betriebszustand des Fahrzeugs erfasst werden und die Zusatzinformation zusätzlich in Abhängigkeit von dem Betriebszustand des Fahrzeugs erzeugt werden. Da bei Fahrzeugen der Bauraum für die Unterbringung von Bedienelementen begrenzt ist, auf der anderen Seite jedoch die Anzahl der zu bedienenden Funktionen im Fahrzeug stetig wächst, werden Bedienelemente häufig mit verschiedenen Funktionen versehen, welche in verschiedenen Betriebszuständen des Fahrzeugs mit dem Bedienelement eingestellt werden können. Beispielsweise kann in Abhängigkeit eines Zustands eines Infotainmentsystems ein Bedienelement wahlweise dazu benutzt werden, eine Lautstärke einer Audioausgabe oder einen Zoomfaktor für eine Landkartendarstellung eines Navigationssystems einzustellen. Indem die jeweils gültige Funktion des Bedienelements bereits bei der Annäherung an das Bedienelement erzeugt und ausgegeben wird, kann dem Benutzer des Fahrzeugs die Bedienung des Infotainmentsystems erleichtert werden. Darüber hinaus kann beispielsweise bereits bei einer Annäherung in einer entsprechenden Hilfeinformation ausführlich dargelegt werden, dass dieses Bedienelement in Abhängigkeit von zuvor eingestellten oder aktuellen Zuständen des Fahrzeugs unterschiedliche Bedienfunktionen aufweisen kann.

Bei einer weiteren Ausführungsform, die nicht von den Ansprüchen umfasst wird, umfasst das Bedienelement einen Teilbereich einer Oberfläche einer Komponente im Innenraum des Fahrzeugs. Das Bedienelement kann beispielsweise ein reales Bedienelement oder ein virtuelles Bedienelement umfassen. Ein virtuelles Bedienelement kann beispielsweise durch eine optische Markierung auf einer beliebigen Oberfläche, beispielsweise auf der Armaturenbrettoberfläche gekennzeichnet sein. Die Oberfläche der Komponente kann zusätzlich mit einem berührungssensitiven Sensor gekoppelt sein, wobei eine Berührung der Oberfläche mittels des berührungssensitiven Sensors erfasst wird und die Berührung des Bedienelements zusätzlich in Abhängigkeit von der Berührung der Oberfläche bestimmt wird. Dadurch können beispielsweise mehrere virtuelle Bedienelemente auf beispielsweise einem Armaturenbrett angeordnet werden und mit einem gemeinsamen berührungssensitiven Sensor eine Berührung des Armaturenbretts erfasst werden. Eine Bestimmung, welches virtuelle Bedienelement betätigt wird, kann mithilfe der Erfassungsvorrichtung auf der Grundlage der Referenztiefenkarte und der aktuellen Tiefenkarte bestimmt werden und die tatsächliche Berührung des Bedienelements mithilfe des berührungssensitiven Sensors. Dadurch kann eine zuverlässige Betätigung verschiedener Bedienelemente auf einfache Art und Weise realisiert werden. Das Bedienelement kann auch beispielsweise ein passives reales Bedienelement umfassen, welches an einer beliebigen Stelle an dem Armaturenbrett angebracht wird, beispielsweise angeklebt wird. Eine Betätigung des passiven realen Bedienelements wird in Abhängigkeit von der Referenztiefenkarte und der aktuellen Tiefenkarte ermittelt.

Bei einer weiteren Ausführungsform, die nicht von den Ansprüchen umfasst wird, des Verfahrens wird eine Position eines Sitzes, auf welchem ein das Bedienelement berührender Fahrzeuginsasse sitzt, bestimmt und eine dem Bedienelement zugeordnete Funktion in Abhängigkeit von der Position des Sitzes, auf welchem der Fahrzeuginsasse sitzt, eingestellt. Beispielsweise kann das Bedienelement zum Verstellen des Sitzes, der Sitzlehne oder zum Einstellen einer Sitzheizung dienen. Indem zusätzlich die Position bestimmt wird, auf welchem der betätigende Fahrzeuginsasse sitzt, kann mit einem Bedienelement wahlweise der Fahrersitz oder der Beifahrersitz eingestellt werden, je nachdem, ob das Bedienelement von dem Fahrer oder von dem Beifahrer betätigt wird.

Bei einer weiteren Ausführungsform, die nicht von den Ansprüchen umfasst wird, wird eine Berührung eines Lenkrades des Fahrzeugs durch ein Körperteil eines Fahrzeuginsassen in Abhängigkeit von der Position des Körperteils des Fahrzeuginsassen bestimmt und eine Warninformation in Abhängigkeit von der Bestimmung der Berührung des Lenkrades ausgegeben. Die Position des Körperteils wird dabei wie zuvor beschrieben als das fahrzeugfremde Objekt bestimmt. Die Art und Weise, wie der Fahrzeuginsasse das Lenkrad berührt und ob der Fahrzeuginsasse das Lenkrad berührt, kann ausgewertet werden, um eine Aufmerksamkeit des Fahrers zu bestimmen. Wenn bestimmt wird, dass der Fahrer nicht ausreichend aufmerksam ist, kann eine entsprechende Warnung ausgegeben werden.

Gemäß einer Ausführungsform, die nicht von den Ansprüchen umfasst wird, wird in Abhängigkeit von der Position des fahrzeugfremden Objekts, beispielsweise eines Körperteils eines Fahrzeuginsassen oder eines Zusatzobjekts, eine Sitzbelegung eines Sitzes des Fahrzeugs bestimmt und eine Einrichtung des Fahrzeugs, welche den Sitz betrifft, in Abhängigkeit von der bestimmten Sitzbelegung angesteuert. Beispielsweise kann eine Airbag-Auslösung verhindert werden, wenn der Sitz unbenutzt ist oder beispielsweise eine Babyschale auf dem Sitz angeordnet ist.

Bei einer weiteren Ausführungsform wird als Position des fahrzeugfremden Objekts eine Position eines mobilen Endgeräts, welches von beispielsweise einem Fahrzeuginsassen gehalten wird, bestimmt. Das mobile Endgerät kann beispielsweise in der Hand des Fahrzeuginsassen gehalten werden. In Abhängigkeit von der Position des mobilen Endgeräts wird ein Anmeldevorgang des mobilen Endgeräts an einem Zugangspunkt des Fahrzeugs freigegeben. Beispielsweise kann eine Authentifizierung von Zusatzgeräten, wie z.B. Mobilfunktelefonen, ermöglicht werden, wenn das Zusatzgerät oder mobile Endgerät in einen vorbestimmten Bereich vor beispielsweise einer Head-Unit eines Infotainmentsystems des Fahrzeugs gehalten wird. Dadurch kann vermieden werden, dass sich nicht-authorisierte Geräte illegal an dem Zugangspunkt des Fahrzeugs, beispielsweise einem WLAN Zugangspunkt, anmelden.

Gemäß der vorliegenden Beschreibung wird ferner eine Positionsbestimmungsvorrichtung zur Bestimmung einer Position eines fahrzeugfremden Objekts in einem Fahrzeug bereitgestellt, beispielsweise zur Bestimmung der Position eines Körperteils eines Fahrzeuginsassen oder eines Zusatzobjekts, welches nicht fest in dem Fahrzeug verbaut ist. Die Positionsbestimmungsvorrichtung umfasst eine Erfassungsvorrichtung zum Erfassen einer Tiefenkarte und eine mit der Erfassungsvorrichtung gekoppelte Verarbeitungsvorrichtung. Die Tiefenkarte gibt für Bildpunkte eines Erfassungsbereichs der Erfassungsvorrichtung jeweils eine Entfernungsinformation zwischen der Erfassungsvorrichtung und einer Oberfläche eines Objekts an dem jeweiligen Bildpunkt an. Die Verarbeitungsvorrichtung ist ausgestaltet, eine Referenztiefenkarte mittels der Erfassungsvorrichtung zu erfassen, welche für Bildpunkte des Erfassungsbereichs der Erfassungsvorrichtung jeweils eine Entfernungsinformation zwischen der Erfassungsvorrichtung und einer Oberfläche eines Objekts an dem jeweiligen Bildpunkt angibt, während sich das fahrzeugfremde Objekt, dessen Position später zu bestimmen ist, nicht in dem Erfassungsbereich befindet. Ferner kann die Verarbeitungsvorrichtung eine aktuelle Tiefenkarte mittels der Erfassungsvorrichtung erfassen. Die aktuelle Tiefenkarte gibt für Bildpunkte des Erfassungsbereichs jeweils eine Entfernungsinformation zwischen der Erfassungsvorrichtung und der Oberfläche eines Objekts an dem jeweiligen Bildpunkt an, während sich das fahrzeugfremde Objekt, dessen Position zu bestimmen ist, in dem Erfassungsbereich befindet. Für die Bildpunkte des Erfassungsbereichs bestimmt die Verarbeitungsvorrichtung jeweils eine Tiefendifferenz. Eine Tiefendifferenz für einen Bildpunkt wird in Abhängigkeit von der Entfernungsinformation der Referenztiefenkarte an dem Bildpunkt und der Entfernungsinformation der aktuellen Tiefenkarte an dem Bildpunkt bestimmt. Die Position des fahrzeugfremden Objekts wird schließlich in Abhängigkeit von den Tiefendifferenzen bestimmt. Die Positionsbestimmungsvorrichtung ist somit zur Durchführung des zuvor beschriebenen Verfahrens geeignet und umfasst daher auch die im Zusammenhang mit dem Verfahren zuvor beschriebenen Vorteile.

Bei einer Ausführungsform umfasst die Erfassungsvorrichtung der Positionsbestimmungsvorrichtung einen Fotomischdetektor oder eine Laufzeitkamera. Ein Fotomischdetektor bzw. eine Laufzeitkamera sind in der Lage, sowohl ein Abbild der Umgebung als Draufsicht aus Sicht der Erfassungsvorrichtung sowie eine Entfernungsinformation zwischen der Erfassungsvorrichtung und einem jeweiligen Bildpunkt des Abbilds bereitzustellen. Somit kann mit dem Fotomischdetektor oder mit der Laufzeitkamera auf einfache Art und Weise eine dreidimensionale Bildinformation des Erfassungsbereichs bereitgestellt werden.

Gemäß der vorliegenden Beschreibung wird weiterhin ein Fahrzeug mit der zuvor beschriebenen Positionsbestimmungsvorrichtung bereitgestellt. Die Erfassungsvorrichtung der Positionsbestimmungsvorrichtung ist beispielsweise benachbart zu einem Innenrückspiegel des Fahrzeugs angeordnet. Durch diese Anordnung im Bereich des Rückspiegels des Fahrzeugs kann die Erfassungsvorrichtung einen großen Bereich im vorderen Teil des Fahrzeugs überwachen und Aktionen eines Fahrzeuginsassen in diesem Bereich erfassen. Insbesondere kann die Erfassungsvorrichtung zumindest einen Teilbereich einer Oberfläche von beispielsweise einem Armaturenbrett, einer Mittelkonsole, einem Lenkrad, einem Fahrersitz und/oder einem Schalthebel des Fahrzeugs erfassen. Dadurch kann eine Vielzahl von Bedienelementen, welche in diesem Bereich angeordnet sind, überwacht werden und Zusatzinformationen zu den Bedienelementen bei einer Annäherung des Benutzers an eines der Bedienelemente ausgegeben werden. Alternativ kann die Erfassungsvorrichtung auch an einem Fahrzeughimmel oder einer Fahrzeuginnenbeleuchtung angebracht sein.

Die vorliegende Beschreibung betrifft weiterhin ein Verfahren zum Erzeugen und Ausgeben einer auf ein Bedienelement bezogenen Zusatzinformation in einem Fahrzeug. Bei dem Verfahren wird eine dreidimensionale Bildinformation in dem Fahrzeug erfasst und eine Position eines Körperteils eines Fahrzeuginsassen oder eines fahrzeugfremden Objekts in dem Fahrzeug in Abhängigkeit von der dreidimensionalen Bildinformation bestimmt. Die Bildinformation kann beispielsweise mit einer zentral angeordneten Erfassungsvorrichtung zur Erfassung von dreidimensionalen Bildern erfasst werden, beispielsweise mit einem Fotomischdetektor oder mit einer Laufzeitkamera. Bei dem Verfahren wird weiterhin eine Berührung des Bedienelements oder einer Annäherung an das Bedienelement in Abhängigkeit von der Position des Körperteils oder des fahrzeugfremden Objekts bestimmt und die auf das Bedienelement bezogenen Zusatzinformation in Abhängigkeit von der bestimmten Berührung oder Annäherung erzeugt und ausgegeben. Beispielsweise kann die Zusatzinformation eine Hilfeinformation zur Bedienung des Bedienelements oder eine aktuell zugeordnete Funktionalität, welche sich in Abhängigkeit eines Fahrzeugzustands ändern kann, betreffen. Dadurch kann eine Bedienung von Bedienelementen in dem Fahrzeug für einen Fahrzeuginsassen intuitiv gestaltet werden.

Obwohl die zuvor beschriebenen Ausführungsformen unabhängig voneinander beschrieben wurden, können die Ausführungsformen beliebig miteinander kombiniert werden.

Die vorliegende Erfindung wird nachfolgend unter Bezugnahme auf die Zeichnung im Detail beschrieben werden.

Figur 1 zeigt schematisch ein Fahrzeug gemäß einer Ausführungsform der vorliegenden Erfindung.
Figur 2 zeigt schematisch eine Positionsbestimmungsvorrichtung in einem Innenraum eines Fahrzeugs gemäß einer Ausführungsform der vorliegenden Erfindung.
Figur 3 zeigt Verfahrensschritte eines Verfahrens gemäß einer Ausführungsform der vorliegenden Erfindung.
Figur 4 zeigt schematisch eine Zuordnung von Bereichen zu Objekten in einem Erfassungsbereich gemäß einer Ausführungsform der vorliegenden Erfindung.
Figur 5 zeigt eine Bewertungsfunktion zur Bestimmung einer Position eines Körperteils gemäß einer Ausführungsform der vorliegenden Erfindung.

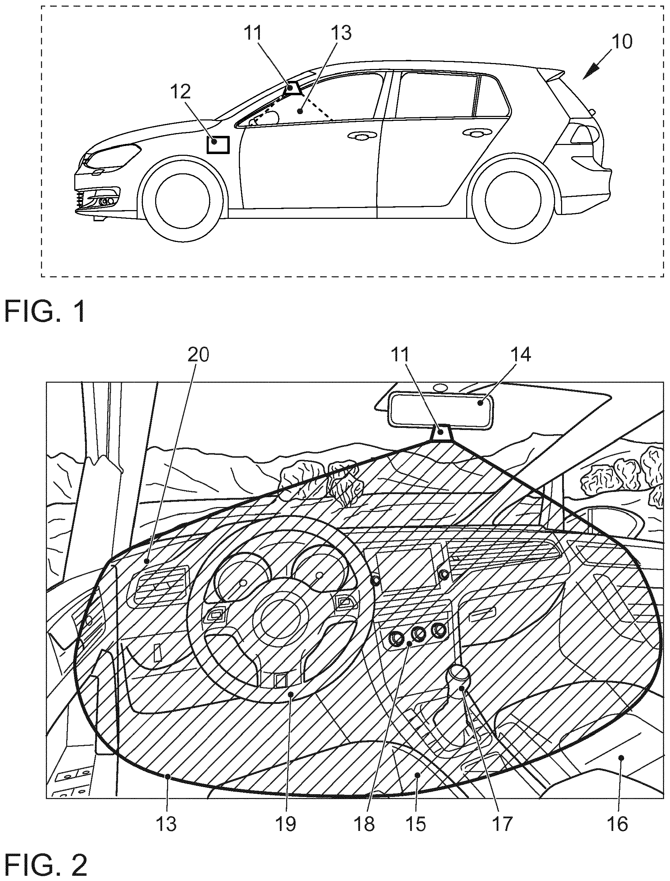

Figur 1 zeigt ein Fahrzeug 10 mit einer Positionsbestimmungsvorrichtung zur Bestimmung einer Position eines fahrzeugfremden Objekts, beispielsweise eines Körperteils eines Fahrzeuginsassen, in dem Fahrzeug 10. Die Positionsbestimmungsvorrichtung umfasst eine Erfassungsvorrichtung 11 und eine Verarbeitungsvorrichtung 12. Die Erfassungsvorrichtung 11 ist in der Lage, eine Tiefenkarte zu erfassen, welche für Bildpunkte eines Erfassungsbereichs 13 jeweils eine Entfernungsinformation zwischen der Erfassungsvorrichtung 11 und einer Oberfläche eines Objekts an dem jeweiligen Bildpunkt angibt. Das Objekt an dem jeweiligen Bildpunkt kann ein Objekt des Fahrzeugs, wie z.B. ein Armaturenbrett, oder ein nicht zu dem Fahrzeug gehörendes Objekt, wie z.B. ein Fahrzeuginsasse oder mobiles Endgerät, sein. Figur 2 zeigt einen Innenraum des Fahrzeugs 10. Die Erfassungsvorrichtung 11 ist im Bereich eines Innenrückspiegels 14 des Fahrzeugs 10 angeordnet. Die Erfassungsvorrichtung 11 umfasst beispielsweise eine Laufzeitkamera, einen sogenannten Fotomischdetektor, mit welcher eine dreidimensionale Bildinformation des Erfassungsbereichs 13 erstellt werden kann. Der Erfassungsbereich 13 umfasst, wie in Figur 2 gezeigt ist, verschiedene Komponenten im vorderen Bereich des Fahrzeugs 10, wie zum Beispiel einen Fahrersitz 15, einen Beifahrersitz 16, einen Schalthebel 17, eine Mittelkonsole 18, ein Lenkrad 19 und ein Armaturenbrett 20 sowie verschiedene Bedienelemente, welche im Bereich des Schalthebels 17, in der Mittelkonsole 18, an dem Lenkrad 19 und an dem Armaturenbrett 20 angeordnet sind. Darüber hinaus kann der Erfassungsbereich 13 auch Teile der Türverkleidungen der vorderen Türen des Fahrzeugs 10 umfassen und somit auch Bedienelemente, welche an den Türverkleidungen angeordnet sind, umfassen, wie z.B. Bedienelemente für die elektrischen Fensterheber des Fahrzeugs oder für die Außenspiegelverstellung des Fahrzeugs.

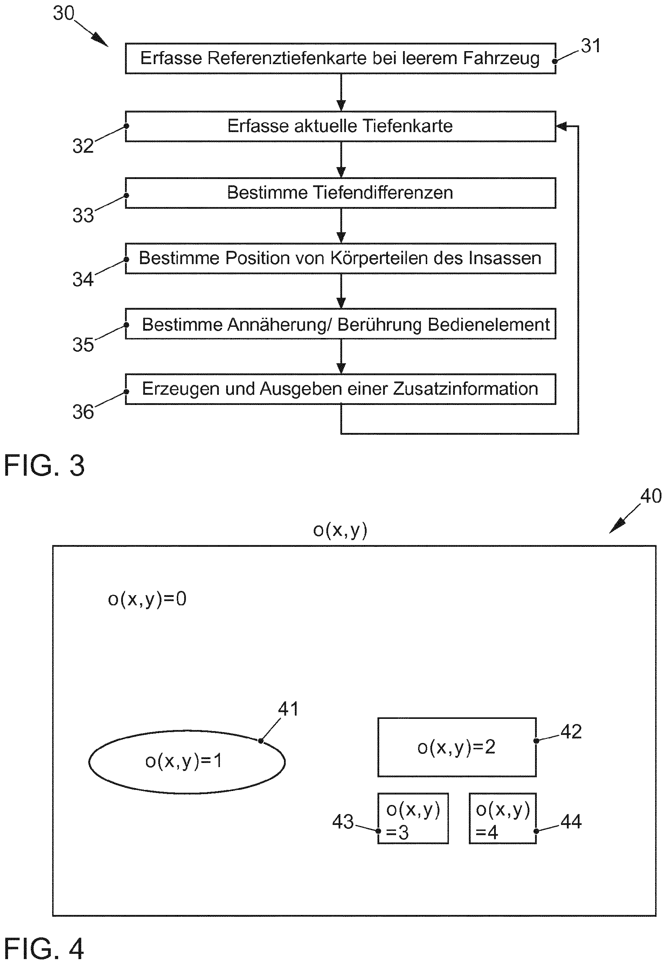

Um die Position eines Körperteils eines Fahrzeuginsassen, beispielsweise eines Fingers oder einer Hand des Fahrzeuginsassen, oder die Position eines Zusatzgeräts in dem Fahrzeug zu bestimmen, wird von der Verarbeitungsvorrichtung 12, welche mit der Erfassungsvorrichtung 11 gekoppelt ist, das nachfolgend unter Bezugnahme auf die Figur 3 beschriebene Verfahren 30 durchgeführt. Im Schritt 31 wird eine Referenztiefenkarte bei leerem Fahrzeug mithilfe der Erfassungsvorrichtung 11 erfasst. Die Referenztiefenkarte gibt für jeden Bildpunkt des Erfassungsbereichs 13 der Erfassungsvorrichtung 11 jeweils eine Entfernungsinformation zwischen der Erfassungsvorrichtung und einer Oberfläche eines Objekts an dem jeweiligen Bildpunkt an. Die Referenztiefenkarte wird erfasst, während sich kein Fahrzeuginsasse in dem Erfassungsbereich 13 befindet. Die Erfassungsvorrichtung 11 erfasst somit ein Tiefenprofil des Fahrzeugs im Ruhezustand, wodurch eine Kalibrierung erfolgt. Bei einem gegebenen Fahrzeugmodell sind beispielsweise durch die Designdaten der Konstruktion die Positionen aller Instrumente und Bedienelemente im Fahrzeug gegeben und können in Regionen im Tiefenprofil umgerechnet werden. Figur 4 zeigt beispielhaft eine Objektkarte 40 für den Erfassungsbereich 13, in welcher vier Objekte 41 bis 44 eingetragen sind. Jeder Bildpunkt (x, y) wird entweder einem Objekt oder dem Hintergrund zugeordnet. Bildpunkten des Objekts 41, beispielsweise das Lenkrad 19 des Fahrzeugs 10, wird der Wert 1 zugeordnet. Bildpunkten des Objekts 42, beispielsweise ein Touchscreen eines Infotainmentsystems des Fahrzeugs, wird der Wert 2 zugeordnet. Bildpunkten der Objekte 43 und 44, beispielsweise Bedienelemente in der Mittelkonsole 18 des Fahrzeugs 10, werden die Werte 3 bzw. 4 zugeordnet. Die im Schritt 31 erfasste Referenztiefenkarte gibt für den leeren Zustand des Fahrzeugs nun jeweils den Abstand zu den Bildpunkten der entsprechenden Objekte an. Im Schritt 32 wird eine aktuelle Tiefenkarte erfasst. Sobald ein Benutzer das Fahrzeug betritt und bedient, nimmt er beispielsweise eine oder beide Hände zu Hilfe, um ein Bedienelement des Fahrzeugs zu berühren. Dadurch wird die Entfernungsinformation zwischen der Erfassungsvorrichtung und einer Oberfläche an dem Ort des berührten Objekts in der aktuellen Tiefenkarte geändert. Im Schritt 33 wird eine Tiefendifferenz zwischen der aktuellen Tiefenkarte und der Referenztiefenkarte bestimmt, wodurch eine Position von Körperteilen des Insassen in dem Fahrzeug in Schritt 34 bestimmt werden kann. Durch diese Bildauswertung wird ermittelt, an welchen Positionen im Raum die Hände das Fahrzeug berühren. Daraus lässt sich das Bedienelement oder das Teilsystem des Fahrzeugs ermitteln, welches der Fahrzeuginsasse steuern oder bedienen möchte. Im Schritt 35 wird eine Annäherung oder Berührung an das Bedienelement bestimmt und abhängig davon eine auf das Bedienelement bezogene Zusatzinformation im Schritt 36 erzeugt und ausgegeben.

Die Information, an welchen Stellen der Insasse die Fahrzeugoberflächen oder Bedienelementoberflächen berührt oder sich ihnen annähert, kann für verschiedene Anwendungen genutzt werden. Ist ein Benutzer an die Bedienung beispielsweise noch nicht gewöhnt und wünscht Hilfe, so kann es ausreichen, dass er mit einer Hand das Bedienelement berührt, welches ihm unbekannt ist. Durch ein etwas längeres Verweilen auf dem unbekannten Bedienelement kann eine Hilfefunktion aktiviert werden, welche beispielsweise auf einem Fahrzeugbildschirm, einem angeschlossenen mobilen Endgerät oder einer Videobrille einen entsprechenden Hilfetext oder Hilfepiktogramme anzeigt. Zum Aktivieren dieser Hilfsfunktion kann beispielsweise zusätzlich eine Hilfetaste im Armaturenbrett oder in einer Head-Unit des Fahrzeugs betätigt werden. Im normalen oder routinierten Betrieb, in welchem eine Hilfestellung nicht notwendig ist, kann das Berühren eines Bedienelements kontextbezogene Zusatzinformationen anzeigen, welche wieder verschwinden, wenn das Bedienelement losgelassen wird. Wenn der Fahrer beispielsweise den Schalthebel 17 anfasst, können auf einem Fahrzeugbildschirm dynamisch Zusatzinformationen zu beispielsweise einer aktuellen Motordrehzahl oder dem optimalen Schaltverhalten dargestellt werden. Ein Berühren des Lichtschalters kann beispielsweise detaillierte Umfeldinformationen aus Fahrersassistenzsystemen in ein Head-Up-Display einblenden, ohne dass der Fahrer seinen Blick von der Straße lösen muss. Ferner können virtuelle oder auch reale Bedienelemente selbst im Fahrzeug definiert werden und an Stellen im Armaturenbrett angeordnet werden, welche noch nicht mit anderen Funktionen belegt sind. Ein Bediensystem kann anschließend trainiert werden, indem der Benutzer an dieser Stelle das Armaturenbrett berührt und diese dreidimensionale Region mit einer auszulösenden Aktion verknüpft. Die Berührung der Stelle des Armaturenbretts wird von der Positionsbestimmungsvorrichtung erfasst und bereitgestellt. Um die Stelle am Armaturenbrett kenntlich zu machen, kann beispielsweise ein passives mechanisches Bedienelement an dieser Stelle auf das Armaturenbrett aufgeklebt werden oder ein Aufkleber angebracht werden. Im Armaturenbrett kann zusätzlich beispielsweise ein berührungssensitiver Sensor angebracht sein, welcher beispielsweise kapazitiv, resistiv oder akustisch mittels eines Mikrofons arbeitet. Der berührungssensitive Sensor benötigt keine Ortsauflösung, da die Berührposition von der Positionsbestimmungsvorrichtung bereitgestellt wird, wohingegen der berührungssensitive Sensor lediglich den Zeitpunkt der Berührung ermittelt und bereitstellt. Dadurch können auf einfache Art und Weise mehrere reale und virtuelle Bedienelemente realisiert werden.

Die Erfassungsvorrichtung 11, welche eine dreidimensionale Bildinformation liefert und idealerweise eine Laufzeitkamera, eine sogenannte Time-of-flight-Kamera ist, ist mit Blick nach unten im Bereich des Innenrückspiegels 14 angebracht und besitzt einen Sichtbereich 13, welcher vorzugsweise die volle Fahrzeugbreite und in Längsrichtung den Bereich zwischen Fahrer und Beifahrer bis über das Armaturenbrett umfasst. Diese Einbauposition hat den Vorteil, dass im Bereich des Innenrückspiegels normalerweise schon eine Stromversorgung vorliegt und ein Bereich des Armaturenbretts, Lenkrads und der Mittelkonsole erfasst werden kann. Die Kameraperspektive ist vorzugsweise derart gewählt, dass keine relevanten Objektoberflächen verdeckt sind und somit alle relevanten Objektoberflächen von der Erfassungsvorrichtung 11 erfasst werden können. Durch die Nutzung der dreidimensionalen Bildinformation und die Erfassung der Zustände ohne und mit Benutzern und fahrzeugfremden Objekten kann das Berühren von Gegenständen mit einem Sensor festgestellt werden. Verschiedene Objekte müssen keine eigene Intelligenz und Elektronik beinhalten. Alternativ kann die Position der Erfassungsvorrichtung 11 variabel zu der beobachtenden Oberfläche sein, z.B. kann die Erfassungsvorrichtung 11 in eine Videobrille integriert werden, welche von dem Benutzer getragen wird. In diesem Fall ist die aktuelle Lage der Erfassungsvorrichtung 11 relativ zu den Oberflächen im Erfassungsbereich 13 immer wieder gemäß dem in Figur 3 dargestellten Verfahren erneut zu ermitteln, damit beispielsweise ein Handkontakt mit der Oberfläche bestimmt werden kann.

Die Positionsbestimmung von Körperteilen des Fahrzeuginsassen mit der Positionsbestimmungsvorrichtung kann für weitere Überwachungen im Fahrzeuginnenraum verwendet werden. Beispielsweise kann eine Fahreraufmerksamkeit aus Bewegungen und Griffpositionen, beispielsweise der Berührung des Lenkrads 19 durch die Hände des Fahrers, bestimmt werden und bei einem Aufmerksamkeitsmangel eine entsprechenden Warnung ausgegeben werden. Weiterhin können Bestimmungen der Personen auf den Sitzen des Fahrzeugs durchgeführt werden, um beispielsweise eine Airbag-Auslösung an die Sitzbelegung anzupassen, beispielsweise wenn ein Sitz unbelegt oder mit einem Kindersitz belegt ist. Weiterhin kann beispielsweise eine automatische Anmeldung eines mobilen Endgeräts, wie z.B. eines Mobilfunktelefons an einen Zugangspunkt, beispielsweise einen sogenannten WLAN-Access Point, in dem Fahrzeug automatisch durchgeführt werden, wenn bestimmt wird, dass sich das mobile Endgerät an einer bestimmten Stelle im Fahrzeuginneren befindet, beispielsweise im Bereich eines Displays einer Head-Unit des Fahrzeugs. Anders ausgedrückt, kann beispielsweise eine sogenannte Zwei-Faktor-Authentifizierung durchgeführt werden, welche die Informationssicherheit im Fahrzeug erhöht. Eine Aktion, welche beispielsweise auf einem Smartphone durch Berühren ausgelöst wird, wird im Fahrzeug nur dann akzeptiert, wenn mithilfe der Positionsbestimmungsvorrichtung des Fahrzeugs gleichzeitig die Berührung oder eine entsprechende Positionierung des Smartphones bestimmt wurde.

Die Auswertung von dreidimensionalen Bilddaten innerhalb des Erfassungsbereichs 13, welche zuvor unter Bezugnahme auf Figur 3 beschrieben wurde, wird nachfolgend in Verbindung mit einer Time-of-flight-Kamera als die Erfassungsvorrichtung 11 im Detail beschrieben werden. Eine Time-of-flight-Kamera erfasst für jeden Bildpunkt den Abstand vom Kamerazentrum zu den Bildpunkten in der Umgebung. Daraus lässt sich eine Tiefenkarte oder Abstandskarte der 3D-Objekte von der Kamera durch eine perspektivische Rückprojektion errechnen. Eine Time-of-flight-Kamera emittiert beispielsweise Infrarotlicht und misst die Farbverschiebung des reflektierten Lichts. Da diese Reflektionen aber sehr schwach sind, ist die Tiefenkarte verrauscht und kann z.B. durch ein nicht-lineares Bilateralfilter geglättet werden. Diese Operation wird für die nachfolgend beschriebenen Rechenschritte vorausgesetzt.

Für die nachfolgende mathematische Beschreibung werden folgenden Größen eingeführt:

$z_{ref}$ (x, y) ist die Referenztiefenkarte für alle Bildpunkte oder Pixel (x, y), wenn sich kein Fahrzeuginsasse oder fahrzeugfremdes Objekt in dem Erfassungsbereich 13 befindet.

z (x, y) ist die aktuelle Tiefenkarte bei einem anwesenden Benutzer oder fahrzeugfremdem Objekt. Insbesondere die Bereiche, in denen sich Referenztiefenkarte und aktuelle Tiefenkarte unterscheiden, sind für die Bildauswertung und Analyse relevant.

o (x, y) kennzeichnet die Objektregionen im Bild, welche für eine Benutzerinteraktion ausgewertet werden sollen. o (x, y) = 0, wenn kein Objekt vorliegt, und o (x, y) = i, wenn dort ein Objekt i vorliegt.

d (x, y) ist eine Distanz, welche für jeden Punkt (x, y, z (x, y)) in einer lokalen Umgebung U (x, y) den nächstgelegenen Punkt aus der Referenzkarte (x', y', $z_{ref}$ (x', y')) sucht und dessen euklidische Distanz im 3D-Raum liefert.

s (d) ist eine Funktion, welche der euklidischen Distanz von zwei Punkten einen Wert zuordnet, um deren Relevanz für die Nähe zweier Punkte zu beschreiben.

$S_i$ ist die Gesamtrelevanz für die Hypothese, dass ein Benutzer sich in unmittelbarer Nähe eines Objekts i befindet. Ein Objekt i wird durch seine Objektregion o (x, y) im Bild und durch seine Referenztiefenkarte im Bereich der Objektregion $z_{ref}$ (x, y) für alle (x, y) mit o (x, y) = i definiert. Ein Objekt kann ungleichmäßig berandet sind und muss nicht einfach zusammenhängend sein.

Zunächst wird die Referenztiefenkarte $z_{ref}$ (x, y) ohne Benutzer aufgenommen und über mehrere Bilder zur Rauschminimierung gemittelt. Sobald ein Benutzer den Fahrzeuginnenraum betritt, werden aktuelle Tiefenkarten z (x, y) erfasst und für alle Bildpunkte im Bereich von registrierten Objekten ihre lokalen Distanzen zu den nächsten Objekt-bildpunkten ermittelt:

$$d(x,y) = \min\nolimits_{\forall x', y' \in U(x,y)} \left\| \begin{pmatrix} x \\ y \\ z(x,y) \end{pmatrix} - \begin{pmatrix} x' \\ y' \\ z_{ref}(x', y') \end{pmatrix} \right\|$$

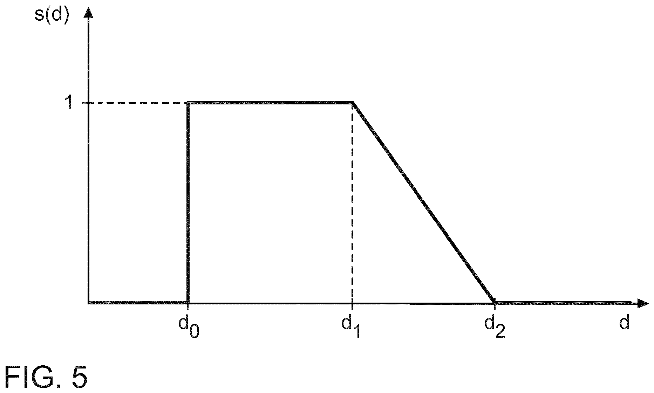

Ein Punkt wird nur als nah zu einem Objekt erkannt, wenn er eine Mindestentfernung zu Punkten des Objekts hat, da die Tiefenkarten verrauscht sein können. Allerdings darf die Distanz zum Objekt nicht zu groß sein. Daher wird die Relevanzfunktion s(d) genutzt, welche zu kleine oder zu große Distanzen bestraft. Figur 5 zeigt eine entsprechende Relevanzfunktion zur Bewertung von Distanzen, welche Distanzen unter $d_0$ und Distanzen über $d_2$ vollständig verwirft, Distanzen zwischen $d_0$ und $d_1$ maximal bewertet und Distanzen zwischen $d_1$ und $d_2$ mit fallender Relevanz bewertet. $d_0$ kann beispielsweise einen Wert von einigen Millimetern, beispielsweise 3 bis 10 mm, aufweisen, $d_1$ einen Wert von 10 bis 50 mm und $d_2$ einen Wert von 20 bis 100 mm.

Die Evidenz dafür, dass sich die Hand des Benutzers nahe zu einem Objekt befindet, wird über alle Bildpunkte, die zu dem Objekt gehören, aufsummiert, und führt zu einer Objektgesamtrelevanz $S_i$:

$$S_i = \sum_{(x,y) \in A_i} s(d(x,y)) \qquad \forall i = 1...N$$

Um Fehlklassifikationen zu reduzieren, wird die Gesamtrelevanz zeitlich mit einem Tiefpass gefiltert und damit geglättet:

$$\overline{S}_i(n) = \alpha \overline{S}_i(n) + (1-\alpha)S_i(n) \qquad 0 < \alpha < 1$$

Dabei gibt n den Zeitschritt an. Liegt $\overline{S}_i(n)$ über einem objektspezifischen Schwellenwert, so wird die Hand als in der Nähe zu dem Objekt befindlich erkannt. Die Positionsbestimmungsvorrichtung ist in der Lage, mehrere Berührungen oder Annäherungen zu erfassen. Sie ist somit "Multitouch"-fähig und kann daher mehrere Objekte in einem Zeitschritt parallel erkennen, da die Objekte und ihre Regionen separat ausgewertet werden.

**Bezugszeichenliste**

| 10 | Fahrzeug |
| 11 | Erfassungsvorrichtung |

| 12 | Verarbeitungsvorrichtung |
| 13 | Erfassungsbereich |
| 14 | Rückspiegel |
| 15 | Fahrersitz |
| 16 | Beifahrersitz |
| 17 | Schalthebel |
| 18 | Mittelkonsole |
| 19 | Lenkrad |
| 20 | Armaturenbrett |
| 30 | Verfahren |
| 31-36 | Schritt |
| 40 | Objektkarte |
| 41-44 | Objekt |

**Patentansprüche**

**1.** Verfahren zur Bestimmung einer Position eines mobilen Endgeräts in einem Fahrzeug, wobei das Verfahren umfasst:

- Erfassen einer Referenztiefenkarte mit einer Erfassungsvorrichtung (11), wobei die Referenztiefenkarte für Bildpunkte eines Erfassungsbereichs (13) der Erfassungsvorrichtung (11) jeweils eine Entfernungsinformation zwischen der Erfassungsvorrichtung (11) und einer Oberfläche eines Objekts an dem jeweiligen Bildpunkt angibt, während sich das mobile Endgerät nicht in dem Erfassungsbereich (13) befindet,
- Erfassen einer aktuellen Tiefenkarte mit der Erfassungsvorrichtung (11), wobei die aktuelle Tiefenkarte für Bildpunkte des Erfassungsbereichs (13) jeweils eine Entfernungsinformation zwischen der Erfassungsvorrichtung (11) und einer Oberfläche eines Objekts an dem jeweiligen Bildpunkt angibt, während sich das mobile Endgerät in dem Erfassungsbereich (13) befindet,
- Bestimmen von Tiefendifferenzen für Bildpunkte des Erfassungsbereichs (13), wobei eine Tiefendifferenz für einen Bildpunkt in Abhängigkeit von der Entfernungsinformation der Referenztiefenkarte an dem Bildpunkt und der Entfernungsinformation der aktuellen Tiefenkarte an dem Bildpunkt bestimmt wird, und
- Bestimmen der Position des mobilen Endgeräts in Abhängigkeit von den Tiefendifferenzen,

    - Bestimmen einer Berührung eines Bedienelements des mobilen Endgeräts in Abhängigkeit von der Position des mobilen Endgeräts, und

- Erzeugen und Ausgeben einer auf das Bedienelement bezogenen Zusatzinformation in Abhängigkeit von der bestimmten Berührung oder Annäherung,
- Freigeben eines Anmeldevorgangs des mobilen Endgeräts an einem Zugangspunkt des Fahrzeugs für mobile Endgeräte in Abhängigkeit von der Position des mobilen Endgeräts wobei eine Position des mobilen Endgeräts als in der Nähe zu einer Oberfläche eines Objekts des Fahrzeugs bestimmt wird, indem eine Tiefendifferenz für einen Bildpunkt des mobilen Endgeräts mittels einer Bewertungsfunktion verarbeitet wird, wobei die Bewertungsfunktion angibt, dass die Position des mobilen Endgeräts in der Nähe zu der Oberfläche des Objekts des Fahrzeugs ist, wenn die Tiefendifferenz einen Wert zwischen einem ersten vorgegebenen Schwellenwert und einem zweiten vorgegebenen Schwellenwertes aufweist.

**2.** Verfahren nach Anspruch 1, **dadurch gekennzeichnet, dass** die Zusatzinformation eine Information über eine Funktion umfasst, welche mit dem Bedienelement beeinflusst werden kann.

**3.** Positionsbestimmungsvorrichtung zur Bestimmung einer Position eines mobilen Endgeräts in einem Fahrzeug, wobei die Positionsbestimmungsvorrichtung umfasst:

- eine Erfassungsvorrichtung (11) zum Erfassen einer Tiefenkarte, wobei die Tiefenkarte für Bildpunkte eines Erfassungsbereichs (13) der Erfassungsvorrichtung (11) jeweils eine Entfernungsinformation zwischen der Erfassungsvorrichtung (11) und einer Oberfläche eines Objekts an dem jeweiligen Bildpunkt angibt, und
- eine mit der Erfassungsvorrichtung (11) gekoppelte Verarbeitungsvorrichtung (12), welche ausgestaltet ist,

    eine Referenztiefenkarte mittels der Erfassungsvorrichtung (11) zu erfassen, wobei die Referenztiefenkarte für Bildpunkte des Erfassungsbereichs (13) der Erfassungsvorrichtung (11) jeweils eine Entfernungsinformation zwischen der Erfassungsvorrichtung (11) und einer Oberfläche eines Objekts an dem jeweiligen Bildpunkt angibt, während sich das mobile Endgerät nicht in dem Erfassungsbereich (13) befindet,

eine aktuelle Tiefenkarte mittels der Erfassungsvorrichtung (11) zu erfassen, wobei die aktuelle Tiefenkarte für Bildpunkte des Erfassungsbereichs (13) jeweils eine Entfernungsinformation zwischen der Erfassungsvorrichtung (11) und einer Oberfläche eines Objekts an dem jeweiligen Bildpunkt angibt, während sich das mobile Endgerät in dem Erfassungsbereich (13) befindet,

Tiefendifferenzen für Bildpunkte des Erfassungsbereichs (13) zu bestimmen, wobei eine Tiefendifferenz für einen Bildpunkt in Abhängigkeit von der Entfernungsinformation der Referenztiefenkarte an dem Bildpunkt und der Entfernungsinformation der aktuellen Tiefenkarte an dem Bildpunkt bestimmt wird,

die Position des mobilen Endgeräts in Abhängigkeit von den Tiefendifferenzen zu bestimmen,

wobei die Verarbeitungsvorrichtung (12) ferner ausgestaltet ist,

eine Berührung eines Bedienelements des mobilen Endgeräts in Abhängigkeit von der Position des mobilen Endgeräts zu bestimmen, und

eine auf das Bedienelement bezogenen Zusatzinformation in Abhängigkeit von der bestimmten Berührung oder Annäherung zu erzeugen und auszugeben, und einen Anmeldevorgang des mobilen Endgeräts an einem Zugangspunkt des Fahrzeugs für mobile Endgeräte in Abhängigkeit von der Position des mobilen Endgeräts freizugeben, wobei eine Position des mobilen Endgeräts als in der Nähe zu einer Oberfläche eines Objekts des Fahrzeugs bestimmt wird, indem eine Tiefendifferenz für einen Bildpunkt des mobilen Endgeräts mittels einer Bewertungsfunktion verarbeitet wird, wobei die Bewertungsfunktion angibt, dass die Position des mobilen Endgeräts in der Nähe zu der Oberfläche des Objekts des Fahrzeugs ist, wenn die Tiefendifferenz einen Wert zwischen einem ersten vorgegebenen Schwellenwert und einem zweiten vorgegebenen Schwellenwertes aufweist.

4.  Positionsbestimmungsvorrichtung nach Anspruch 3, **dadurch gekennzeichnet, dass** die Erfassungsvorrichtung (11) einen Photomischdetektor und/oder eine Laufzeitkamera umfasst.

5.  Fahrzeug mit einer Positionsbestimmungsvorrichtung nach Anspruch 3 oder 4, **dadurch gekennzeichnet, dass** die Erfassungsvorrichtung (11) benachbart zu einem Innenrückspiegel (14) des Fahrzeugs (10) angeordnet ist.

6.  Fahrzeug nach Anspruch 5, **dadurch gekennzeichnet, dass** die Erfassungsvorrichtung (11) ausgestaltet ist, zumindest einen Teilbereich einer Oberfläche von mindestens einer der folgenden Fahrzeugkomponenten zu erfassen:

    - ein Armaturenbrett (20),
    - eine Mittelkonsole (18),
    - ein Lenkrad (19),
    - einen Fahrersitz (15), und
    - einen Schalthebel (17).


**Claims**

1.  Method for determining a position of a mobile terminal in a vehicle, wherein the method comprises:

    - capturing a reference depth map using a capturing device (11), wherein the reference depth map indicates, for image points of a capturing range (13) of the capturing device (11), in each case distance information between the capturing device (11) and a surface of an object at the relevant image point, while the mobile terminal is not located in the capturing range (13),
    - capturing a current depth map using the capturing device (11), wherein the current depth map indicates, for image points of the capturing range (13), in each case distance information between the capturing device (11) and a surface of an object at the relevant image point, while the mobile terminal is located in the capturing range (13),
    - determining depth differences for image points of the capturing range (13), wherein a depth difference for an image point is determined on the basis of the distance information of the reference depth map at the image point and the distance information of the current depth map at the image point, and
    - determining the position of the mobile terminal on the basis of the depth differences,
    - determining a touch of an operator control of the mobile terminal on the basis of the position of the mobile terminal, and
    - generating and outputting additional information related to the operator control on the basis of the determined touch or approach,
- enabling a login process of the mobile terminal to an access point of the vehicle for mobile terminals depending on the position of the mobile terminal, wherein a position of the mobile terminal is determined to be near a surface of an object of the vehicle by processing a depth difference for an image point of the mobile terminal by means of an evaluation function, wherein the evaluation function indicates that the position of the mobile terminal is near the surface of the object of the vehicle when the depth difference has a value between a first predefined threshold and a second predefined threshold.

2. Method according to claim 1, **characterized in that** the additional information includes information about a function that can be influenced by the operator control.

3. Position determination device for determining a position of a mobile terminal in a vehicle, wherein the position determination device comprises:

- a capturing device (11) for capturing a depth map, wherein the depth map indicates, for image points of a capturing range (13) of the capturing device (11), in each case distance information between the capturing device (11) and a surface of an object at the relevant image point, and
- a processing device (12), which is coupled to the capturing device (11) and configured

to capture a reference depth map by means of the capturing device (11), wherein the reference depth map indicates, for image points of the capturing range (13) of the capturing device (11), in each case distance information between the capturing device (11) and a surface of an object at the relevant image point while the mobile terminal is not located in the capturing range (13),

to capture a current depth map by means of the capturing device (11), wherein the current depth map indicates, for image points of the capturing range (13), in each case distance information between the capturing device (11) and a surface of an object at the relevant image point while the mobile terminal is located in the capturing range (13),

to determine depth differences for image points of the capturing range (13), wherein a depth difference for an image point is determined on the basis of the distance information of the reference depth map at the image point and the distance information of the current depth map at the image point,

to determine the position of the mobile terminal on the basis of the depth differences,

wherein the processing device (12) is further configured

to determine a touch of an operator control of the mobile terminal on the basis of the position of the mobile terminal, and

to generate and output additional information related to the operator control on the basis of the determined touch or approach, and

to enable a login process of the mobile terminal to an access point of the vehicle for mobile terminals depending on the position of the mobile terminal,

wherein a position of the mobile terminal is determined to be near a surface of an object of the vehicle by processing a depth difference for an image point of the mobile terminal by means of an evaluation function, wherein the evaluation function indicates that the position of the mobile terminal is near the surface of the object of the vehicle when the depth difference has a value between a first predefined threshold and a second predefined threshold.

4. Position determination device according to claim 3, **characterized in that** the capturing device (11) comprises a photonic mixer device and/or a time-of-flight camera.

5. Vehicle comprising a position determination device according to either claim 3 or claim 4, **characterized in that** the capturing device (11) is arranged adjacently to an internal rear-view mirror (14) of the vehicle (10).

6. Vehicle according to claim 5, **characterized in that** the capturing device (11) is configured to capture at least one portion of a surface of at least one of the following vehicle components:

- a dashboard (20),
- a center console (18),
- a steering wheel (19),
- a driver's seat (15), and
- a gear stick (17).

**Revendications**

1. Procédé pour la détermination d'une position d'un périphérique mobile dans un véhicule, le procédé comprenant :

   - la détection d'une carte de profondeurs de référence à l'aide d'un dispositif de détection (11), la carte de profondeurs de référence indiquant, pour des points d'image d'une zone de détection (13) du dispositif de détection (11), à chaque fois une information d'éloignement entre le dispositif de détection (11) et une surface d'un objet au niveau du point d'image respectif, pendant que le périphérique mobile ne se trouve pas dans la zone de détection (13),
   - la détection d'une carte de profondeurs actuelle à l'aide d'un dispositif de détection (11), la carte de profondeurs actuelle indiquant, pour des points d'image de la zone de détection (13), à chaque fois une information d'éloignement entre le dispositif de détection (11) et une surface d'un objet au niveau du point d'image respectif, pendant que le périphérique mobile se trouve dans la zone de détection (13),
   - la détermination de différences de profondeur pour des points d'image de la zone de détection (13), une différence de profondeur pour un point d'image étant déterminée en fonction de l'information d'éloignement de la carte de profondeurs de référence au niveau du point d'image et de l'information d'éloignement de la carte de profondeurs actuelle au niveau du point d'image et
   - la détermination de la position du périphérique mobile en fonction des différences de profondeur,
   - la détermination d'un toucher d'un élément de commande du périphérique mobile en fonction de la position du périphérique mobile et
   - la génération et l'émission d'une information supplémentaire se rapportant à l'élément de commande en fonction du toucher ou du rapprochement déterminé,
   - la validation d'un processus de notification du périphérique mobile à un point d'accès du véhicule pour des périphériques mobiles en fonction de la position du périphérique mobile, une position du périphérique mobile étant déterminée comme se trouvant à proximité d'une surface d'un objet du véhicule en ce qu'une différence de profondeur pour un point d'image du périphérique mobile est traitée au moyen d'une fonction d'évaluation, la fonction d'évaluation indiquant que la position du périphérique mobile se trouve à proximité de la surface de l'objet du véhicule lorsque la différence de profondeur présente une valeur située entre une première valeur seuil prédéfinie et une deuxième valeur seuil prédéfinie.

2. Procédé selon la revendication 1, **caractérisé en ce que** l'information supplémentaire comprend une information sur une fonction qui peut être influencée par l'élément de commande.

3. Dispositif de détermination de position pour la détermination d'une position d'un périphérique mobile dans un véhicule, le dispositif de détermination de la position comprenant :

   - un dispositif de détection (11) pour détecter une carte de profondeur, la carte de profondeur indiquant, pour des points d'image d'une zone de détection (13) du dispositif de détection (11), à chaque fois une information d'éloignement entre le dispositif de détection (11) et une surface d'un objet au niveau du point d'image respectif et
   - un dispositif de traitement (12) couplé au dispositif de détection (11), qui est équipé pour

     détecter une carte de profondeurs de référence à l'aide du dispositif de détection (11), la carte de profondeurs de référence indiquant, pour des points d'image d'une zone de détection (13) du dispositif de détection (11), à chaque fois une information d'éloignement entre le dispositif de détection (11) et une surface d'un objet au niveau du point d'image respectif, pendant que le périphérique mobile ne se trouve pas dans la zone de détection (13),
     détecter une carte de profondeurs actuelle à l'aide du dispositif de détection (11), la carte de profondeurs actuelle indiquant, pour des points d'image de la zone de détection (13), à chaque fois une information d'éloignement entre le dispositif de détection (11) et une surface d'un objet au niveau du point d'image respectif, pendant que le périphérique mobile se trouve dans la zone de détection (13),
     déterminer des différences de profondeur pour des points d'image de la zone de détection (13), une différence de profondeur pour un point d'image étant déterminée en fonction de l'information d'éloignement de la carte de profondeurs de référence au niveau du point d'image et de l'information d'éloignement de la carte de profondeurs actuelle au niveau du point d'image,
     déterminer la position du périphérique mobile en fonction des différences de profondeur,
     le dispositif de traitement (12) étant outre équipé pour
     déterminer un toucher d'un élément de commande du périphérique mobile en fonction de la position du périphérique mobile et pour

générer et émettre une information supplémentaire se rapportant à l'élément de commande en fonction du toucher ou du rapprochement déterminé et

valider un processus de notification du périphérique mobile à un point d'accès du véhicule pour des périphériques mobiles en fonction de la position du périphérique mobile,

une position du périphérique mobile étant déterminée comme se trouvant à proximité d'une surface d'un objet du véhicule en ce qu'une différence de profondeur pour un point d'image du périphérique mobile est traitée au moyen d'une fonction d'évaluation, la fonction d'évaluation indiquant que la position du périphérique mobile se trouve à proximité de la surface de l'objet du véhicule lorsque la différence de profondeur présente une valeur située entre une première valeur seuil prédéfinie et une deuxième valeur seuil prédéfinie.

4. Dispositif de détermination de position selon la revendication 3, **caractérisé en ce que** le dispositif de détection (11) comprend un détecteur PMD (Photonic Mixer Device) et/ou une caméra de temps de trajet.

5. Véhicule présentant un dispositif de détermination de position selon la revendication 3 ou 4, **caractérisé en ce que** le dispositif de détection (11) est disposé à proximité d'un rétroviseur interne (14) du véhicule (10).

6. Véhicule selon la revendication 5, **caractérisé en ce que** le dispositif de détection (11) est équipé pour détecter au moins une zone partielle d'une surface d'au moins un des éléments de véhicule suivants :

- un tableau de bord (20),
- une console centrale (18),
- un volant (19)
- un siège de conducteur (15) et
- un levier de vitesse (17).

EP 3 254 172 B1

FIG. 1

FIG. 2

30

| Erfasse Referenztiefenkarte bei leerem Fahrzeug | 31 |

32 | Erfasse aktuelle Tiefenkarte |

33 | Bestimme Tiefendifferenzen |

34 | Bestimme Position von Körperteilen des Insassen |

35 | Bestimme Annäherung/ Berührung Bedienelement |

36 | Erzeugen und Ausgeben einer Zusatzinformation |

# FIG. 3

40

o(x,y)

o(x,y)=0

41

o(x,y)=1

42

o(x,y)=2

43

o(x,y)
=3

o(x,y)
=4

44

# FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011089195 A1
- WO 9934235 A1
- DE 102013000080 A1
- DE 112008001396 T5
- EP 2762345 A2
- EP 2118722 B1
- DE 102004038965 A1